# EUROPÄISCHE PATENTSCHRIFT

(11) **EP 2 044 674 B1**
(45) Veröffentlichungstag und Bekanntmachung des Hinweises auf die Patenterteilung: **22.03.2017**
(21) Anmeldenummer: 07787019.4
(22) Anmeldetag: 03.07.2007
(51) Int. Cl.: H02K 3/38

(54) **LÄUFERPAKET MIT GENUTETER ISOLATIONSENDSCHEIBE**
ROTOR SET HAVING A GROOVED INSULATION END PLATE
EMPILEMENT DE ROTOR AVEC UNE RONDELLE ISOLANTE D'EXTRÉMITÉ RAINURÉE

(30) Priorität: 14.07.2006 DE 102006032713
(43) Veröffentlichungstag der Anmeldung: 08.04.2009
(73) Patentinhaber: BSH Hausgeräte GmbH, 81739 München (DE)
(72) Erfinder: MANGER, Dieter, 97618 Wollbach (DE); REISENWEBER, Walter, 97638 Mellrichstadt (DE)
(86) Internationale Anmeldenummer: PCT/EP2007/056696
(87) Internationale Veröffentlichungsnummer: WO 2008/006741

(56) Entgegenhaltungen:
- EP-A- 0 260 570
- DD-A1- 269 954
- DD-A5- 286 694
- US-A1- 2001 022 483

## Beschreibung

### Hintergrund der Erfindung

Die vorliegende Erfindung betrifft ein Läuferpaket für einen elektrischen Motor oder Generator gemäß dem Oberbegriff des Anspruchs 1. Sie betrifft außerdem ein Verfahren zum Isolieren eines Läuferkerns eines elektrischen Motors oder Generators gemäß dem Oberbegriff des Anspruchs 9.

### Stand der Technik

Eine Vorrichtung und ein Verfahren dieser Gattung sind beispielsweise aus der deutschen Offenlegungsschrift DE 1838776 U bekannt. Der dort offenbarte Läuferkern für einen Elektro-Kleinmotor ist auf seinen Stirnseiten durch beidseitig auf die Läuferwelle aufgesteckte Isolierendscheiben isoliert. Die Isolierendscheiden sind dort, wo die Wickeltunnel des Läuferkerns enden, mit Ausschnitten versehen. Die Wickeltunnel des Läuferkerns sind mit Auskleidungen versehen, die über den Läuferkern hinaus in die Ausschnitte der Seitenplatten hineinreichen.

Zwischen Isolierendscheibe und den Auskleidungen der Wickeltunnel sind demnach Spalte vorhanden. Um nach dem Bewickeln des isolierten Läuferkerns im Läuferpaket Kriechströmen durch diese Spalte zwischen dem Läuferkern und der Läuferwicklung entgegenzuwirken, muss bekanntermaßen eine Kriechstrecke vorgesehen werden. Die VDE-Vorschrift EN 60335-1:1994 verlangt bei aktiven lackierten oder emaillierten Wicklungen je nach Bauart Mindestkriechstrecken. Bei Läuferpaketen der beschriebenen Art wird dies üblicherweise dadurch erreicht, dass die Isolierendscheibe eine entsprechende Stärke aufweist. Hierdurch wird in den Spalten eine Kriechstrecke erforderlicher Länge von der Außenseite zur Innenseite der Isolierendscheibe gebildet.

Es ist ebenfalls bekannt, dass Läuferpakete der genannten Art nach dem Bewickeln mit Harz beschichtet werden, um die Läuferwicklung zu verfestigen.

Aus der europäischen Offenlegungsschrift EP 1 292 003 A1 ist eine Isolierendscheibe bekannt, deren die Polzähne abdeckenden Abschnitte in ihrer Stärke von außen nach innen abnehmen. Dies soll dazu beitragen, dass die Drähte beim Bewickeln in den Winkeltunnel gezogen werden, was das Bewickeln vereinfachen soll und einem Abrutschen der Drähte von den Polzähnen entgegenwirken soll.

Schließlich ist aus der deutschen Patentschrift DD 286 694 A5 ein Läuferisolierstern bekannt, der mit einer doppelwandingen einen Ringspalt bildenden Nabe ausgestattet ist. Weiter sind an der Übergangsstelle zwischen Nabe und Scheibe des Läuferisoliersterns Durchbrüche vorgesehen. Mit der Erfindung sollen von Tränklack unbenetzte Räume im Wickelkopf dadurch vermieden werden, dass Tränklack durch Kapillarwirkung in den Ringspalt gezogen wird und über die Durchbrüche in das Innere der Läuferwicklung gelangt.

Aus der DD 269 954 A1 ist eine Isolierendscheibe für Ankerblechpakete elektrischer Maschinen bekannt. Zur Verlängerung der Luft- und Kriechstrecken sind im Bereich des Zahnkopfes in axialer Richtung des Läufers sich erstreckende hornförmige Verlängerungen angeformt.
Aus der US 2001/022483 A1 ist ein Rotor bekannt. Der Rotor besitzt eine Abschirmung für die Windungen mit einem röhrenförmigen axialen Fortsatz.
Aus der EP 0 260 570 A ist ein Kommutatormotor mit Isolierabdeckung der Rotorwelle bekannt. Die Isolierabdeckung weist eine axial stauchbare Hülse als getrenntes Bauteil zwischen der Isolierendscheibe und der gegenüberliegenden Kommutatorstirnseite auf.

### Der Erfindung zugrunde liegendes Problem

Es ist in vielen Anwendungen wünschenswert, die Baulänge elektrischer Motoren und Generatoren so klein wie möglich zu halten. Die Baulänge wird wesentlich durch die Länge des Läuferpakets bestimmt. Es ist deshalb ein Nachteil des bekannten Läuferpakets, dass die Isolierendscheibe durch ihre Stärke das Läuferpaket verlängert.

Ein weiterer Nachteil des bekannten Läuferpakets besteht darin, dass sich Harz im Anlagebereich der Läuferwicklung auf der Isolierendscheibe sammeln und zu einer unkontrollierten Umwucht führen kann.

Der vorliegenden Erfindung liegt demnach die Aufgabe zugrunde, ein verbessertes Läuferpaket und ein verbessertes Verfahren zum Isolieren eines Läuferkerns bereitzustellen, das die Nachteile des Stands der Technik überwindet.

### Erfindungsgemäße Lösung

Zur Lösung der Aufgabe lehrt die vorliegende Erfindung ein Läuferpaket mit den Merkmalen des Anspruchs 1 und ein Verfahren zum Isolieren eines Läuferkerns mit den Merkmalen des Anspruchs 9.

Erfindungsgemäß ist die Stärke der Isolierendscheibe im Bereich der Vertiefung geringer ist als die nach VDE EN 60335-1:1994 mindestens vorgeschriebene Kriechstrecke zwischen Läuferkern und Läuferwicklung. Die von der Norm VDE EN 60335-1:1994 vorgeschriebene Mindestkriechstrecke ist bauartabhängig. Insbesondere sind für Geräte und Bauarten der Schutzklasse III bei aktiven lackierten oder emaillierten Wicklungen eine Kriechstrecke von mindestens 1 Millimeter und bei anderen Geräten je nach Arbeitsspannung 1,5 Millimeter (Arbeitsspannungen kleiner oder gleich 130 V) oder 2 Millimeter (Arbeitsspannungen zwischen 130 und 250 Volt) vorgeschrieben.

Die Vertiefung im Innenbereich kann den von der Läuferwicklung im Bereich der Isolierendscheibe von der Läuferwicklung gebildeten Wickelkopf wenigstens teilweise aufnehmen und dadurch die Länge des Läuferpakets verringern. Da die Dicke der Isolierendscheibe im Randbereich erhalten bleibt, kann dennoch vorteilhaft die erforderliche Kriechstrecke weiter zur Verfügung stehen, vorzugsweise dadurch, dass die Isolierendscheibe dort eine größere Dicke aufweist als die nach VDE EN 60335-1:1994 mindestens vorgeschriebene Kriechstrecke.

Nachdem der Läuferkern bewickelt worden ist, werden die Wicklungen vorzugsweise mit einem Harz beschichtet, um sie zu verfestigen. Bevorzugte Harze sind Polyesterharz und Epoxydharz. In einer Ausführung der Erfindung wird die Wicklung in einem Harzbad getränkt. Besonders vorzugsweise wird sie mit Harz beträufelt. Dieser Schritt kann insbesondere verhindern, dass ein gepresster Wickelkopf sich nach dem Pressen wieder ausdehnt.

Durch die Vertiefung im Innenbereich kann auch erfindungsgemäß erreicht werden, dass dort die Läuferwicklung nicht an der Isolierendscheibe anliegt. Dies kann einem unkontrollierten Ansammeln von Harz in diesem Bereich und folglich einer dadurch verursachten Umwucht entgegenwirken. Der Motor oder Generator kann leiser und verschleißärmer sein. Außerdem kann Harz eingespart werden.

Die vorliegende Erfindung ermöglicht vorteilhaft, elektrische Motoren und Generatoren kompakter zu konstruieren. Dies kann Material und Kosten einsparen. Weiter lassen sich zum Beispiel Haushaltsgeräte mit Elektromotoren kleinerer Baulänge kompakter gestalten und/oder im Gewicht reduzieren. Außerdem können durch die Erfindung leisere und verschleißärmere Motoren und Generatoren hergestellt werden.

### Aufbau und Weiterbildung der erfindungsgemäßen Lösung

Vorteilhafte Aus- und Weiterbildungen, welche einzeln oder in Kombination miteinander eingesetzt werden können, sind Gegenstand der abhängigen Ansprüche.

Die Ausschnitte im Randbereich einer bevorzugten Isolierendscheibe sind im Wesentlichen U- oder V-förmig, entsprechend dem U- oder V-förmigen Querschnitt der Wickeltunnel des Läuferkerns. Eine bevorzugte Isolierendscheibe ähnelt einem Stirnzahnrad mit zwischen den Ausschnitten angeordneten Zähnen. Die bevorzugte Isolierendscheibe weist außerdem eine zentrale Öffnung als Nabe zur Aufnahme einer Läuferwelle auf.

Die Isolierendscheibe ist vorzugsweise im Randbereich zwischen 1 und 3 Millimeter stark, besonders vorzugsweise mehr als 2 Millimeter, besonders vorzugsweise ca. 2, 5 Millimeter, um eine ausreichende Kriechstrecke zwischen ihrer Außenseite und dem Läuferkern darzustellen. Im Bereich der Vertiefung ist die Stärke der bevorzugten Isolierendscheibe auf vorzugsweise ca. 0,5 bis 2 Millimeter reduziert, besonders vorzugsweise ca. 1 Millimeter.

Bei der Erfindung bildet die Vertiefung auf einer dem Kommutator zugewandten Seite einen Hohlraum zwischen Wickelkopf und Isolierendscheibe. Hierzu wird der Wickelkopf entweder nicht oder nur so weit in die Vertiefung gepresst, dass noch ein Zwischenraum zwischen Wicklung und dem Boden der Vertiefung verbleibt. Dadurch, dass sich Wicklung und Isolierendscheibe nicht berühren, kann einem unkontrollierten Ansammeln von Harz zwischen Isolierendscheibe und Wicklung bei der Beschichtung der Wicklung mit Harz entgegengewirkt werden.

Der Läuferkern und die Isolierendscheibe sind mit einer Läuferwicklung umwickelt. In einer Ausführung der Erfindung reicht der von der Läuferwicklung im Bereich der Isolierendscheibe gebildete Wickelkopf auf einer vom Kommutator abgewandten Seite in die Vertiefung der Isolierendscheibe hinein und füllt die Vertiefung besonders vorzugsweise im Wesentlichen aus. Dazu ist der Wickelkopf vorzugsweise in Richtung der Vertiefung gepresst. Dadurch, dass der Wickelkopf so wenigstens teilweise von der Vertiefung aufgenommen wird, kann die überstehende Höhe des Wickelkopfs reduziert und das Läuferpaket insgesamt verkürzt werden.

Erfindungsgemäß ist der Läuferkern auf beiden Stirnseiten durch Isolierendscheiben mit der erfindungsgemäßen Vertiefung isoliert. Weiter ist das bevorzugte Läuferpaket gemeinsam mit einem Kommutator auf einer Läuferwelle angeordnet, um einen Läufer für einen elektrischen Motor oder Generator zu bilden. Dabei ist der Wickelkopf auf der vom Kommutator abgewandten Seite des Läuferpakets vorzugsweise in die Vertiefung der auf dieser Seite angeordneten Isolierendscheibe gepresst, um die Höhe des Wickelkopfs und damit die Länge des Läuferpakets zu reduzieren. Hingegen ist der Wickelkopf auf der dem Kommutator zugewandten Seite nicht in die Vertiefung gepresst, sodass die Wicklung die Isolationsendscheibe wegen der Vertiefung nicht berührt und so einem Ansammeln von Harz entgegengewirkt wird.

Natürlich sind auch Ausführungen der Erfindung denkbar, bei denen nur eine der Isolierendscheiben die erfindungsgemäße Vertiefung aufweist und die andere zum Beispiel eine Isolierendscheibe der vorbekannten Art ist.

Die Vertiefung kann die Form einer ringförmigen Nut in der Isolierendscheibe haben. Die Vertiefung kann in Ihrer Form auch an die zur Isolierscheibe weisende äußere Kontur des Wickelkopfs angepasst sein. Die bevorzugte Vertiefung verläuft im Innenbereich zwischen Nabe und Randbereich der Isolierendscheibe. Besonders vorzugsweise erstreckt sie sich im Wesentlichen über die gesamte Fläche des Innenbereiches. In dem Fall, dass die Vertiefung zur Aufnahme der Läuferwicklung dient, kann so ein möglichst großer Hohlraum geschaffen werden. Wenn die Vertiefung dazu dient, ein Anliegen der Läuferwicklung an der Isolierendscheibe zu verhindern, kann dies so auf einer möglichst großen Fläche erreicht werden.

Die Läuferwicklung muss gewöhnlich nicht nur gegenüber dem Läuferkern sondern auch gegenüber der Läuferwelle isoliert werden. Vorzugsweise ist dazu eine Isolationshülse vorgesehen, die die Läuferwelle umschließt. In einer besonders bevorzugten Ausführung der Erfindung ist die Isolierendscheibe einstückig mit der Isolationshülse verbunden. Dadurch ist es möglich die Anzahl der Bauteile und der Arbeitsschritte beim Herstellen eines Läufers zu reduzieren, weil Isolierendscheibe und Hülse in einem Arbeitsgang an den Läufer angebracht werden können.

Um Kriechströmen zwischen der Wickelung und der Läuferwelle entgegenzuwirken, wird in einer Ausführung der Erfindung zwischen dem Ende des Wickelkopfs und der Welle eine Kriechstrecke dadurch gebildet, dass die Isolationshülse in Längsrichtung der Läuferwelle um eine entsprechende Länge über das Ende des Wickelkopfs hinausreicht.

In einer anderen Ausführung der Erfindung ist die Isolationshülse in Längsrichtung der Läuferwelle unter Bildung eines Kragens stauchbar, wobei der Kragen einen Außendurchmesser aufweist, der größer als der Außendurchmesser der ungestauchten Isolationshülse ist. Der durch das Stauchen der Isolationshülse gebildete Kragen schafft eine Kriechstrecke in radialer Richtung - also senkrecht zur Läuferwelle -, die die in Längsrichtung der Läuferwelle verlaufende Kriechstrecke ganz oder teilweise ersetzen kann. Deshalb kann bei Einhaltung der vorgeschriebenen Kriechstrecke die Länge des Überstands der Isolationshülse am Ende der Welle reduziert werden, wodurch sich die Gesamtlänge des Läuferpakets weiter reduziert.

Bevorzugte Materialien für die Isolierhülse bzw. die kombinierte Isolierendscheibe/Isolierhülse sind Kunststoffe, besonders vorzugsweise Phenolharzkunststoffe oder andere wärmebeständige Kunststoffe. Die Isolierendscheibe bzw. die kombinierte Isolierendscheibe/ Isolierhülse wird vorzugsweise im Spritzgussverfahren hergestellt.

Die Erfindung wird vorzugsweise in einem elektrischen Motor, besonders vorzugsweise in einem Kommutatormotor eingesetzt, besonders vorzugsweise in Haushaltsgeräten. Zum Beispiel kann der Motor ein Gebläse in einem Staubsauger oder in einem Haartrockner oder in einem Stabmixer oder eine Arbeitswelle in einer Küchenmaschine antreiben.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: einen Längsschnitt des erfindungsgemäßen Läufers mit einem Läuferkern, der auf beiden Seiten durch eine Isolierendscheibe mit Vertiefung isoliert ist;
- Fig. 2:: eine Isolierendscheibe mit Vertiefung, die einstückig mit einer Isolationshülse verbunden ist; und
- Fig. 3:: eine Ansicht auf die einstückig mit der Isolationshülse verbundene Isolierendscheibe entlang ihrer Rotationssymmetrieachse von oben.

### Ausführliche Beschreibung eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

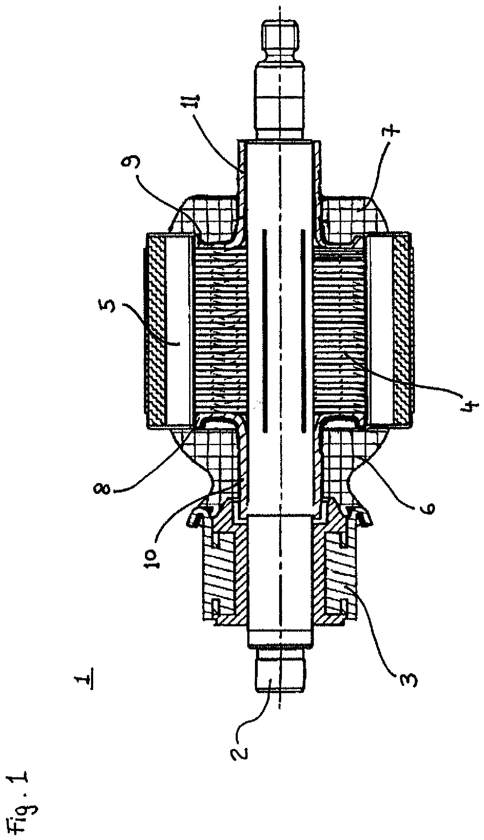

In Fig. 1 dargestellt ist ein Läufer 1 für einen Kommutatormotor mit einer Läuferwelle 2, die ein erfindungsgemäßes Läuferpaket und einen Kommutator 3 trägt. Das Läuferpaket umfasst einen Läuferkern 4, der mit einer Läuferwicklung bewickelt ist, die in bekannter Weise durch Wickeltunnel 5 des Läuferkerns 4 läuft und auf der dem Kommutator 3 zugewandten und der dem Kommutator 3 abgewandten Seite je einen Wickelkopf 6, 7 bildet. Auf den Stirnseiten des Läuferkerns 4 ist dieser durch die sternförmige Isolierendscheiben 8, 9 von den Läuferwicklungen elektrisch isoliert. Entlang der Wickeltunnel 5 ist der Läuferkern 4 von der Wicklung durch eine nicht dargestellte hochspannungsfeste Folie elektrisch isoliert, die über die gesamte Länge des Läuferkerns und der Isolierendscheiben 8, 9 verläuft. Die Läuferwicklungen der Wickelköpfe 6, 7 sind durch mit den Isolierendscheiben 8 und 9 einstückig verbundenen Isolationshülsen 10 bzw. 11 von der Läuferwelle 2 elektrisch isoliert.

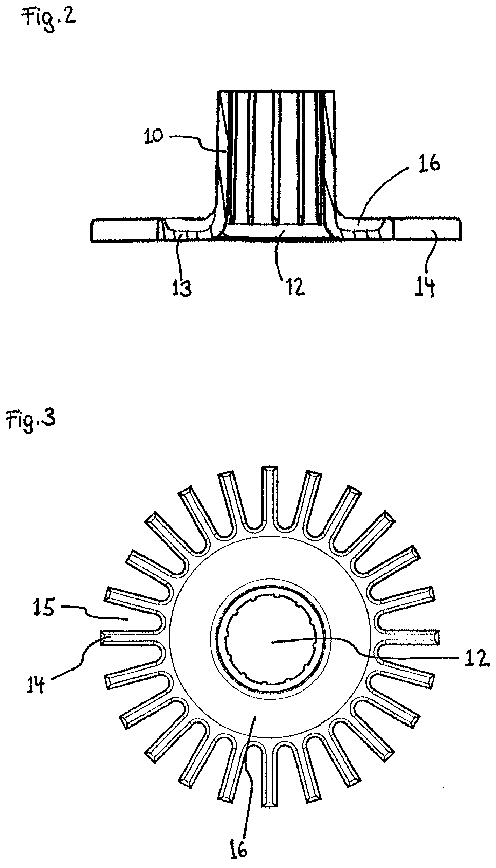

In den Fig. 2 und 3 ist eine der beiden identischen Isolationsendscheiben 8, 9 genauer dargestellt. Die Isolierendscheibe 8, 9 hat eine zentrale Öffnung 12 zur Aufnahme der Läuferwelle 2, einen Innenbereich 13 und einen Randbereich 14 mit Ausschnitten 15 an den Stellen, wo sich, wenn die Isolationsendscheibe 8, 9 auf eine Stirnseite des Läuferkerns 4 aufgesetzt ist, die Öffnungen der Wickeltunnel 5 befinden. Der Innenbereich 13 ist mit einer ringförmigen Vertiefung 16 versehen. Im Randbereich 14 hat die Isolierendscheibe eine Stärke von beispielsweise 2,5 Millimetern, im Innenbereich 13 ist die Stärke durch die Vertiefung 16 auf beispielsweise 1 Millimeter reduziert.

An der Stelle der Öffnung 12 ist die Isolationshülse 10, 11 zum Isolieren der Läuferwelle 2 gegen den Wickelkopf 6 einstückig angeformt. Die Länge der Isolationshülse 10, 11 ist so gewählt, dass sie vorzugsweise mehr als 2 Millimeter über das Ende des Wickelkopfs 6, 7 hinausragt, um die erforderliche Kriechstrecke darzustellen.

Wie nun wieder in Fig. 1 zu erkennen ist, ist der Wickelkopf 7 auf der vom Kommutator 3 abgewandten Seite des Läuferpakets in die Isolierendscheibe 9 gepresst, sodass die Vertiefung 16 dieser Isolierendscheibe 7 mit der Läuferwicklung im Wesentlichen ausgefüllt ist. Hierdurch wird die Höhe des Wickelkopfs 7 und damit die Länge des Läuferpakets verringert. Versuche haben gezeigt, dass hierdurch vorteilhaft eine Materialersparnis von ca. 0,5 Gramm erreicht werden kann.

Auf der Kommutatorseite des Läuferpakets ist der Wickelkopf 6 nicht in die Vertiefung 16 der Isolierscheibe 8 gepresst. Die Vertiefung 16 bildet hier einen Hohlraum, sodass Wicklung und Isolierendscheibe 8 dort nicht in Kontakt kommen, was einem Ansammeln von Harz in diesem Bereich entgegenwirkt. Versuche haben gezeigt, dass sich hierdurch vorteilhaft ca. 0,5 bis 1 Gramm Harz einsparen lassen.

Das Läuferpaket ist zur Fixierung der Läuferwicklung mit Polyesterharz beschichtet.

Zur Herstellung des Läufers 1 werden zunächst der Kommutator 3, die kommutatorseitige Isolierendscheibe 8 mit der einstückig angeformten Isolationshülse 10, der Läuferkern 4 und die vom Kommutator 3 abgewandte Isolierendscheibe 9 mit der einstückig angeformten Isolationshülse 11 auf die Läuferachse 2 aufgesteckt. Anschließend wird der Läuferkern 4 mit der Läuferwicklung bewickelt. Der Wickelkopf 7 auf der vom Kommutator 3 abgewandten Seite des Läuferkerns 4 wird in Richtung des Läuferkerns 4 gepresst. Schließlich wird das Läuferpaket in Polyesterharz getränkt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die vorliegende Erfindung ermöglicht vorteilhaft, elektrische Motoren und Generatoren kompakter zu konstruieren. Dies kann Material und Kosten einsparen. Weiter lassen sich zum Beispiel Haushaltsgeräte mit Elektromotoren kleinerer Baulänge kompakter gestalten und/oder im Gewicht reduzieren. Außerdem können durch die Erfindung leisere und verschleißärmere Motoren und Generatoren hergestellt werden.

Die Erfindung wird vorzugsweise in einem elektrischen Motor, besonders vorzugsweise in einem Kommutatormotor eingesetzt, besonders vorzugsweise in Haushaltsgeräten. Zum Beispiel kann der Motor ein Gebläse in einem Staubsauger oder in einem Haartrockner oder in einem Stabmixer oder eine Arbeitswelle in einer Küchenmaschine antreiben.

## Patentansprüche

1. Läuferpaket für einen elektrischen Motor oder Generator mit einem Läuferkern (4), einer Läuferwicklung mit Wickelkopf (6, 7) und mindestens einer Isolierendscheibe (8, 9) zum Isolieren einer Stirnseite des Läuferkerns (4) gegen die Läuferwicklung, wobei die Läuferwicklung mit einem Harz beschichtet ist, wobei die Isolierendscheibe (8, 9) einen Innenbereich (13) und einen mit Ausschnitten (15) versehenen Randbereich (14) aufweist und die Isolierendscheibe (8, 9) auf ihrer vom Läuferkern (4) abgewandten Seite im Innenbereich (13) eine Vertiefung (16) aufweist, **dadurch gekennzeichnet, dass** die Stärke der Isolierendscheibe (8, 9) im Bereich der Vertiefung (16) geringer ist als die nach VDE EN 600335-1:1994 vorgeschriebene Kriechstrecke zwischen Läuferkern (4) und Läuferwicklung, und auf einer einem Kommutator (3) zuwendbaren Seite die Vertiefung (16) einen Hohlraum zwischen Wickelkopf (6) und Isolierendscheibe (8, 9) bildet.

2. Läuferpaket nach Anspruch 1, **dadurch gekennzeichnet, dass** der von der Läuferwicklung im Bereich der Isolierendscheibe (8, 9) gebildete Wickelkopf (7) in die Vertiefung (16) hineinreicht.

3. Läuferpaket nach Anspruch 2, **dadurch gekennzeichnet, dass** der Wickelkopf (7) auf einer einem Kommutator (3) abgewandten Seite in Richtung der Vertiefung (16) gepresst ist.

4. Läuferpaket nach einem der vorherigen Ansprüche, **dadurch gekennzeichnet, dass** die Vertiefung (16) die Form einer ringförmigen Nut hat.

5. Läuferpaket nach einem der vorherigen Ansprüche, **dadurch gekennzeichnet, dass** die Vertiefung (16) in ihrer Form an die zur Isolierendscheibe (8, 9) weisende äußere Kontur des Wickelkopfs (6, 7) angepasst ist.

6. Läuferpaket nach einem der vorherigen Ansprüche, **dadurch gekennzeichnet, dass** die Vertiefung (16) sich im Wesentlichen auf die gesamte Fläche des Innenbereiches (13) erstreckt.

7. Läuferpaket nach einem der vorherigen Ansprüche, **dadurch gekennzeichnet, dass** die Isolierendscheibe (8, 9) einstückig mit einer Isolationshülse (10, 11) zum Isolieren der Läuferwicklung gegenüber einer Läuferwelle (2) verbunden ist.

8. Läuferpaket nach Anspruch 7, **dadurch gekennzeichnet, dass** die Isolationshülse (10, 11) in Längsrichtung der Läuferwelle (2) unter Bildung eines Kragens stauchbar ist, wobei der Kragen einen Außendurchmesser aufweist, der größer als der Außendurchmesser der ungestauchten Isolationshülse (10, 11) ist.

9. Verfahren zum Isolieren eines Läuferkerns (4) eines elektrischen Motors oder Generators gegenüber einer Läuferwicklung, bei dem an einer Stirnseite des Läuferkerns (4) eine Isolierendscheibe (8, 9) mit einer Vertiefung (16) in einem Innenbereich (13) der vom Läuferkern (4) abgewandten Seite der Isolierendscheibe (8, 9) angeordnet wird, **dadurch gekennzeichnet, dass** die Stärke der Isolierendscheibe (8, 9) im Bereich der Vertiefung (16) geringer ist als die nach VDE EN 600335-1:1994 vorgeschriebene Kriechstrecke zwischen Läuferkern (4) und Läuferwicklung, wobei
auf beiden Stirnseiten des Läuferkerns (4) eine Isolierendscheibe (8, 9) mit einer Vertiefung (16) im Innenbereich (13) der vom Läuferkern (4) abgewandten Seite der Isolierendscheibe (8, 9) angeordnet wird; und
der Läuferkern (4) anschließend mit einer Läuferwicklung so bewickelt wird, dass die Vertiefung (16) auf einer einem Kommutator (3) zugewandten Seite einen Hohlraum zwischen Wickelkopf (6) und Isolierendscheibe (8, 9) bildet, wobei die Läuferwicklung mit einem Harz beschichtet ist.

10. Verfahren nach Anspruch 9, **dadurch gekennzeichnet, dass** ein von der Läuferwicklung auf einer Stirnseite des Läuferkerns (4) gebildeter Wickelkopf (7) auf einer einem Kommutator (3) abgewandten Seite in Richtung des Läuferkerns (4) gepresst wird.

## Claims

1. Rotor set for an electric motor or generator with a rotor core (4), a rotor winding with winding head (6, 7) and at least one insulation end plate (8, 9) for insulating a face side of the rotor core (4) from the rotor winding, wherein the rotor winding is coated with a resin, wherein the insulation end plate (8, 9) has an inner area (13) and an edge area (14) provided with cutouts (15) and the insulation end plate (8, 9) has a depression (16) on its side facing away from the rotor core (4) in the inner area (13), **characterised in that** the thickness of the insulation end plate (8, 9) in the area of the depression (16) is less than the leakage gap predefined according to VDE EN 600335-1:1994 between rotor core (4) and rotor winding, and the depression (16) forms a cavity between winding head (6) and insulation end plate (8, 9) on a side facing the commutator (3).

2. Rotor set according to claim 1, **characterised in that** the winding head (7) formed by the rotor winding in the area of the insulation end plate (8, 9) reaches into the depression (16).

3. Rotor set according to claim 2, **characterised in that** the winding head (7) is pressed in the direction of the depression (16) on a side facing away from the commutator (3).

4. Rotor set according to one of the preceding claims, **characterised in that** the depression (16) has the form of an annular groove.

5. Rotor set according to one of the preceding claims, **characterised in that** the depression (16) is adapted in its form to the outer contour of the winding head (6, 7) pointing towards the insulation end plate (8, 9).

6. Rotor set according to one of the preceding claims, **characterised in that** the depression (16) essentially extends over the entire surface of the inner area (13).

7. Rotor set according to one of the preceding claims, **characterised in that** the insulation end plate (8, 9) is connected in one piece with an insulating sleeve (10, 11) for insulating the rotor winding from a rotor shaft (2).

8. Rotor set according to claim 7, **characterised in that** the insulating sleeve (10, 11) is extendable in a longitudinal direction of the rotor shaft (2) by forming a collar, wherein the collar has an external diameter which is greater than the external diameter of the unextended insulating sleeve (10, 11).

9. Method for insulating a rotor core (4) of a electric motor or generator from a rotor winding, in which on a face side of the rotor core (4) an insulation end plate (8, 9) with a depression (16) in an inner area (13) of the side of the insulation end plate (8, 9) facing away from the rotor core is arranged, **characterised in that** the thickness of the insulation end plate (8, 9) in the area of the depression (16) is less than the leakage gap predefined in accordance with VDE EN 600335-1:1994 between rotor core (4) and rotor winding, wherein
on the two face sides of the rotor core (4) is arranged an insulation end plate (8, 9) with a depression (16) in the inner area (13) of the side of the insulation end plate (8, 9) facing away from the rotor core (4), and
the rotor core (4) is subsequently wound with a rotor winding such that the depression (16) on a side facing a commutator (3) forms a cavity between winding head (6) and insulation end plate (8, 9), wherein the rotor winding is coated with a resin.

10. Method according to claim 9, **characterised in that** a winding head (7) formed by the rotor winding on a face side of the rotor core (4) is pressed in the direction of the rotor core (4) on a side facing away from the commutator (3).

## Revendications

1. Paquet rotorique pour un moteur électrique ou un générateur, comprenant un noyau de rotor (4), un enroulement de rotor avec tête d'enroulement (6, 7) et au moins un disque d'extrémité isolant (8, 9) servant à isoler une face frontale du noyau de rotor (4) contre l'enroulement de rotor, ledit enroulement de rotor étant recouvert d'une résine, ledit disque d'extrémité isolant (8, 9) comportant une zone intérieure (13) et une zone de bordure (14) pourvue de découpures (15) et ledit disque d'extrémité isolant (8, 9) comportant sur sa face opposée au noyau de rotor (4), dans la zone intérieure (13), un renfoncement (16), **caractérisé en ce que** l'épaisseur du disque d'extrémité isolant (8, 9) dans la région du renfoncement (16) est plus petite que la ligne de fuite prescrite selon VDE EN 600335-1 : 1994 entre le noyau de rotor (4) et l'enroulement de rotor, et sur une face pouvant être tournée vers un collecteur (3), le renfoncement (16) forme un espace creux entre la tête d'enroulement (6) et le disque d'extrémité isolant (8, 9).

2. Paquet rotorique selon la revendication 1, **caractérisé en ce que** la tête d'enroulement (7) formée par l'enroulement de rotor dans la région du disque d'extrémité isolant (8, 9) s'étend jusque dans le renfoncement (16).

3. Paquet rotorique selon la revendication 2, **caractérisé en ce que** sur une face opposée à un collecteur (3), la tête d'enroulement (7) est pressée en direction du renfoncement (16).

4. Paquet rotorique selon l'une des revendications précédentes, **caractérisé en ce que** le renfoncement (16) a la forme d'une rainure annulaire.

5. Paquet rotorique selon l'une des revendications précédentes, **caractérisé en ce que** la forme du renfoncement (16) est adaptée au contour extérieur orienté vers le disque d'extrémité isolant (8, 9) de la tête d'enroulement (6, 7).

6. Paquet rotorique selon l'une des revendications précédentes, **caractérisé en ce que** le renfoncement (16) s'étend sensiblement sur toute la surface de la zone intérieure (13).

7. Paquet rotorique selon l'une des revendications précédentes, **caractérisé en ce que** le disque d'extrémité isolant (8, 9) est relié d'un seul tenant à une douille d'isolation (10, 11) servant à isoler l'enroulement de rotor par rapport à un arbre de rotor (2).

8. Paquet rotorique selon la revendication 7, **caractérisé en ce que** la douille d'isolation (10, 11) peut être aplatie dans le sens longitudinal de l'arbre de rotor (2) en formant un collet, ledit collet ayant un diamètre extérieur plus grand que le diamètre extérieur de la douille (10, 11) non aplatie.

9. Procédé d'isolation d'un noyau de rotor (4) d'un moteur électrique ou d'un générateur par rapport à un enroulement de rotor, dans lequel un disque d'extrémité isolant (8, 9) avec un renfoncement (16) dans une zone intérieure (13) de la face opposée au noyau de rotor (4) du disque d'extrémité isolant (8, 9) est monté sur une face frontale du noyau de rotor (4), **caractérisé en ce que** l'épaisseur du disque d'extrémité isolant (8, 9) dans la région du renfoncement (16) est plus petite que la ligne de fuite prescrite selon VDE EN 600335-1 : 1994 entre le noyau de rotor (4) et l'enroulement de rotor, un disque d'extrémité isolant (8, 9) avec un renfoncement (16) dans la zone intérieure (13) de la face opposée au noyau de rotor (4) du disque d'extrémité isolant (8, 9) étant monté sur les deux faces frontales du noyau de rotor (4) ; et
le noyau de rotor (4) étant ensuite muni d'un enroulement de rotor tel que le renfoncement (16) sur une face tournée vers un collecteur (3) forme un espace creux entre la tête d'enroulement (6) et le disque d'extrémité isolant (8, 9), l'enroulement de rotor étant recouvert d'une résine.

10. Procédé selon la revendication 9, **caractérisé en ce que** qu'une tête d'enroulement (7) formée par l'enroulement de rotor sur une face frontale du noyau de rotor (4) est pressée sur une face opposée à un collecteur (3) en direction du noyau de rotor (4).
